# EUROPEAN PATENT APPLICATION

(11) **EP 3 779 370 A1**
(43) Date of publication of application: **17.02.2021**
(21) Application number: 19020470.1
(22) Date of filing: 13.08.2019
(51) Int. Cl.: G01D 9/42, G01D 13/22, G01D 5/39

(54) **GAUGE**

(71) Applicant: Linde GmbH, 82049 Pullach (DE)
(72) Inventor: Thind, Mandip, Southall, UB2 5RS (GB); Jacobsen, Brian, London, SW12 9RF (GB); Reid, Dennis, Pulborough, West Sussex RH20 1AS (GB)
(74) Representative: Gellner, Bernd

(57) **Abstract**

Gauge (100) comprising a gauge needle (110), a rotational position of which in a rotational plane (115) indicating a measurement value, the gauge needle comprising a stem (112) rotatable about a rotational axis (114) and an pointer (116) extending perpendicularly to the stem (112), a rotation of the stem (112) about the rotational axis (114) effecting a movement of the pointer (116) within the rotational plane, further comprising an irradiation unit (130) for irradiating the gauge needle (110) with irradiation including a radiation component propagating in a direction parallel to the rotational plane of the pointer (116) and a capture unit (150) for capturing the irradiation subsequently to the irradiation impinging or otherwise interacting with the gauge needle (110) in order to ascertain the rotational position of the gauge needle (110).

## Description

The invention relates to a gauge, an add-on kit for use with a gauge and a method for providing a gauge reading.

Prior to the introduction of digital valves, i.e. valves comprising a digital display output, it was common to display for example gas cylinder contents, usually in the form of cylinder pressure, using an analogue manometer gauge, also referred to as pressure gauge. Herein, the pressure value of a gas cylinder is converted into a rotational displacement of a pointer of a gauge needle. Such a pressure gauge may be incorporated into a regulator, which can be detached from the cylinder, or into an integrated valve, in which regulator, flow control and gauge are combined into one unit and permanently attached to the cylinder.

For numerous applications, for example medical applications, it is important to be able to enter a current pressure value of a gas cylinder into an associated computing unit in digitized form for further processing. With existing analogue pressure valves, this requires a manual reading of the pressure value by an operator, followed by a manual entering of the pressure value as read into the computing unit, typically using a keyboard or a touchscreen. This procedure is obviously cumbersome and error-prone.

The present invention seeks to simplify the providing of digitized meter readings for analogue gauges.

To this effect, the present invention suggests a gauge, an add-on kit for use with a gauge and a method for providing a gauge reading comprising the features of the respective independent claims.

The invention provides a gauge comprising a gauge needle, a rotational position of which in a rotational plane indicating a measurement value, the gauge needle comprising a stem rotatable about a rotational axis and a pointer extending perpendicularly to the stem, a rotation of the stem about the rotational axis effecting a movement of the pointer within the rotational plane, further comprising an irradiation unit for irradiating the gauge needle with irradiation including a radiation component propagating in a direction parallel to the rotational plane of the pointer and a capture unit for capturing the irradiation subsequently to the irradiation impinging or otherwise interacting with the gauge needle in order to ascertain the rotational position of the gauge needle and thereby a corresponding measurement value .

By providing irradiation including a radiation component propagating in a direction parallel to the rotational plane of the pointer, it is possible to ascertain the position of the gauge needle without obscuring the front face of the gauge, which remains visible to an operator for manual readings. The invention provides a capture or imaging of the position of the gauge needle from a sideways position, the irradiation impinging on or otherwise interacting with the needle propagating preferably solely in a plane parallel to the rotational plane of the needle pointer, or, in other words, perpendicularly to axis of rotation of the needle stem. Be it noted that the irradiation may, within a certain range, propagate at an angle to the plane of rotation of the pointer, i.e. comprising an irradiation component in the direction of the axis of rotation of the stem.

The invention also provides an add-on kit for a pre-existing gauge comprising a gauge needle, a rotational position of which in a rotational plane indicating a measurement value, the gauge needle comprising a stem rotatable about a rotational axis and a pointer extending perpendicularly to the stem, a rotation of the stem about the rotational axis effecting a movement of the pointer within the rotational plane, the add-on kit comprising an irradiation unit adapted for irradiating the gauge needle with irradiation including a radiation component propagating in a direction parallel to the rotational plane of the pointer and a capture unit adapted for capturing the irradiation subsequently to the irradiation impinging or otherwise interacting with the gauge needle in order to ascertain the rotational position of the gauge needle and thereby a corresponding measurement value. By means of such an add-on kit pre-existing analogue gauges, which only allow manual reading of measurements by an operator, can easily and cost effectively be upgraded with a digital read-out function. Advantageously, the add-on kit, in addition to the irradiation unit and the capture unit, comprises a computing unit such as a customized microcontroller adapted for processing information received by the capture unit.

The invention also provides a method for providing a digitized gauge reading for a gauge comprising a gauge needle, a rotational position of which in a rotational plane indicating a measurement value, the gauge needle comprising a stem rotatable about a rotational axis and an pointer extending perpendicularly to the stem, a rotation of the stem about the rotational axis effecting a movement of the pointer within the rotational plane, the method comprising irradiating the gauge needle with irradiation including a radiation component propagating in a direction parallel to the rotational plane of the pointer and capturing the irradiation subsequently to the irradiation impinging or otherwise interacting with the gauge needle in order to ascertain the rotational position of the gauge needle and thereby a corresponding measurement value.

Advantageous embodiments are the subject matter of the dependent claims.

Advantageously, the irradiation unit and the capture unit are arranged on a gauge housing circumferentially surrounding the rotational plane of the pointer. Such a gauge housing is typically of a cylindrical shape, and the irradiation unit as well as the capture unit can be affixed to the outside of the inside of the housing. At least the parts of the housing on which the irradiation unit and the capture unit are provided are advantageously transparent for the irradiation used.

According to a preferred embodiment, the irradiation unit comprises a light source and the capturing unit comprises a light detector and/or a camera. Herewith, reliable and exact measurements of needle positions can be obtained.

According to a further embodiment, the irradiation unit comprises a sound source , especially an ultrasound source, and the capture unit comprises a sound detector, especially an ultrasound detector. Such an ultrasound detector can be provided in form of a piezo element. This embodiment using sound or ultrasound irradiation can be used alternatively or additionally to the embodiment utilizing light.

Advantageously, the capture unit captures irradiation passing by the gauge needle. Depending on the rotational position of the gauge needle, more or less light will be able to pass the needle, leading to a more or less pronounced shadow area on the capture unit. The size of this shadow area corresponds to the needle position and is easily measurable.

Alternatively, the capture unit captures irradiation reflected by the gauge needle. The angle of reflection will depend on the rotational position of the needle, and provides a further advantageous possibility of ascertaining the needle position.

Advantageously, the stem is provided with a non-circular cross-section, for example a rectangular cross-section. With such a non-circular cross section, the amount of light blocked by the stem during its propagation from illumination unit to capture unit will vary depending on needle position. The shadows thus formed on the capture unit correspond to specific needle positions and thus measurement values.

Advantageously, a computing unit, for example a customized microcontroller, for calculating the rotational position of the gauge needle on the basis of the irradiation captured by the capture unit and the corresponding pressure value on the basis of the rotational position of the gauge needle is provided.

According to a preferred embodiment of the invention, the gauge is provided as a pressure gauge, the measurement value being a pressure value of a gas cylinder, to which the pressure gauge is attached.

Further advantageous embodiments of the invention will now be described with reference to the appended drawings. Herein
Figure 1 is a schematic side sectional view of a first embodiment of the invention,
Figure 2 is a schematic plan view of a second embodiment of the invention with the gauge needle in a first rotational position ,
Figure 3 is a schematic plan view of the second embodiment of the invention with the gauge needle in a second rotational position,
Figure 4 is a schematic plan view of a third embodiment of the invention,
Figure 5 is a schematic plan view of a fourth embodiment of the invention, and
Figure 6 is a schematic plan view of a fifth embodiment of the invention.

In the figures like components are designated with like reference numerals.

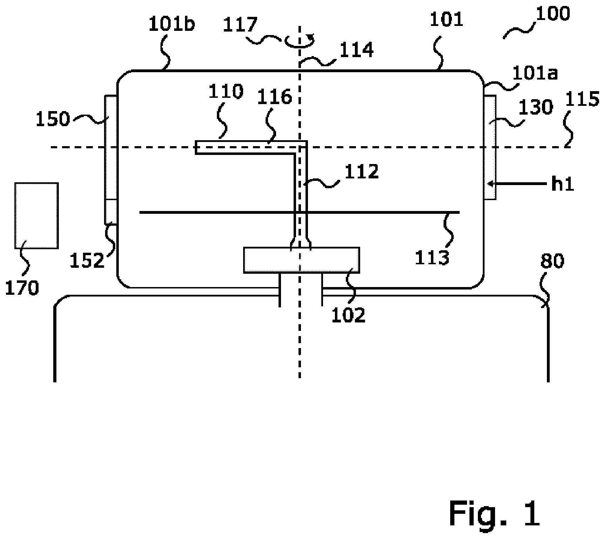

Figure 1 shows a schematic side view of a first embodiment of the invention. A pressure gauge generally designated 100 comprises a housing 101 including a cylindrical side wall 101a and a front face 101b. Front face 102b is made of a transparent material. Also, side wall 101a is, at least in part, made of a transparent material, as will be further expanded on below. Furthermore, pressure gauge comprises a pressure sensitive mechanism 102 within the housing 101, which is shown purely schematically. Gauge 100 is adapted to be affixed to a gas cylinder 80.

The mechanism 102 is adapted to provide a rotational movement in case of increasing or decreasing pressure within gas cylinder 80.

This rotational motion is imparted on a gauge needle 110 rotatable about an axis 114, which interacts with the mechanism 102 in a known manner. The rotation of gauge needle about axis 114 is indicated by means of circular arrow 117. Typical examples of such mechanisms can be found in prior art Bourdon gauges, for example. Such a gauge needle comprises a stem 112 and a pointer 116. For example, the motion can be transferred by means of a small-diameter pinion gear system provided, so the rotational motion of the mechanism can be magnified to provide easier reading of the needle position for a user. Herein, the stem 112 is rotatable about rotational axis 114. The movement of the pointer 116 thus defines a rotational plane 115 perpendicular to rotational axis 114.

By means of an indicator card 113 comprising a dial located behind the pointer (seen form the side of frontface 101b), readings of the rotational position of pointer 116 indicating pressure within gas cylinder 80 can be easily obtained by an operator.

The gauge 100 further comprises an irradiation unit 130 attached to the outer surface of cylindrical side wall 101a, as well as a capture unit 150, also attached to the outer surface of cylindrical side wall 101a and adapted to capture irradiation emitted by irradiation unit 130 after this has interacted with needle 110, either by passing it or being reflected by it, as will be discussed in detail in the following. Be it noted that the gauge 100 can comprise a plurality of irradiation units 130 and/or capture units 150, which are then expediently arranged around the circumference of cylindrical side wall 101a. Furthermore, the irradiation unit(s) and the capture unit(s) can also be provided on the inside of wall 101a, i.e. within housing 101.

The capture unit is provided with transmssion means 152 for transmitting information to a computing unit 170, which can be provided remotely from the pressure gage 110 and is adapted to compute pressure values for gas cylinder 80 based on the information received form the capture unit. The computing device 170 can also be provided as a component of the gauge 100.

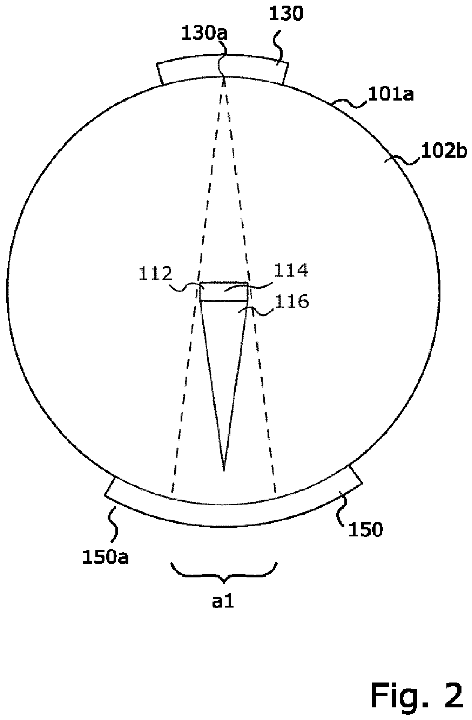

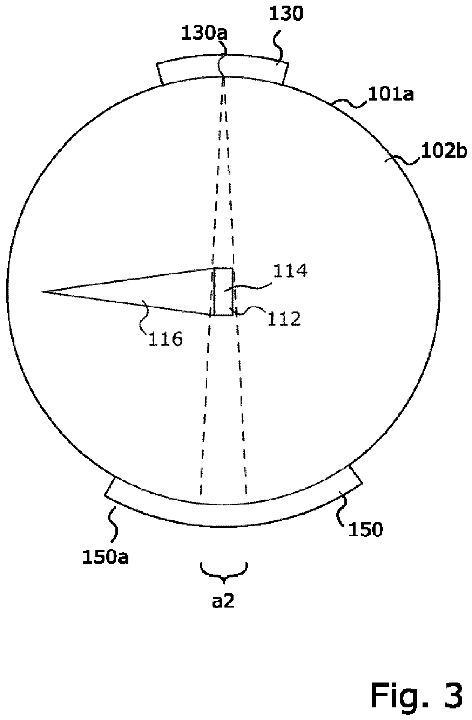

Figures 2 and 3 show a schematic top view of a second embodiment of a gauge according to the invention, i.e. viewed through front face 102b. Here, the irradiation unit 130 comprises a light source such as an LED 130a which emits light towards stem 112. Advantageously, LED 130a is positioned at a height h1 on wall 101a between pointer 116 and indicator card 113, as indicated in Figure 1. Light emitted by LED 130a, which essentially propagates in a plane parallel to rotational plane 115 shown in Figure 1 and thus without any significant component perpendicular hereto, is captured by at least one light detector 150a, which can be provided for example as a photodiode, a linear photodiode array, a CMOS sensor, a CCD sensor or a camera. Irradiating means and capture means are provided on the outside on opposite sides of wall 101a. At least the portions of wall 101a, on which the irradiating means and the capture means are provided are made of a transparent material.

As can be seen from Figures 2 and 3, the stem 112 is provided with a rectangular, i.e. non-circular cross section. Thus, the amount of light blocked by the stem 112 on its way from LED 130a to light detector 150a will vary with the rotational position of the stem 112. For example, the shadow width a1 resulting from the stem position shown in Figure 2 is larger than the shadow width a2 visible in Figure 3. According to the invention, the amount of light thus blocked can be measured and converted into a digital signal. By measuring for example the shadow width (e.g. a1 or a2), preferably as full width half maximum FWHM at varying pressures, the shadow width can be converted into a pressure reading by subsequently using a formula which converts shadow width back into pressure or a lookup table using a range of stored values.

Advantageously, the light detector(s) 150a and the light source, e.g. LED 130a can be positioned in such a way that the maximum shadow width corresponds to a specific area of interest of the pressure gauge 100. For example, the peak width could be set to coincide with a "red region" or "alert region", when the pressure of the gas cylinder 80 indicates that the cylinder contents have fallen below 25%. As the recorded width decreases from its maximum value, an alert can be triggered to inform a user that the cylinder contents are running low. Multiple light sources and detectors can be used to improve the accuracy or resolution of this technique.

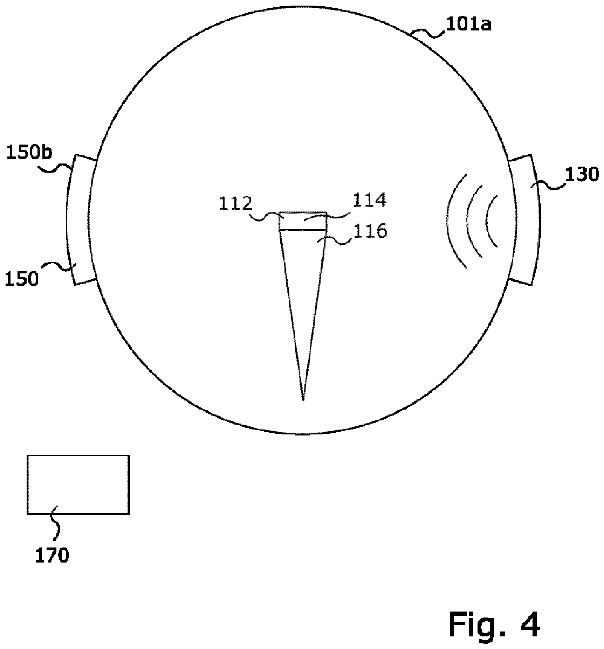

Figure 4 shows a further embodiment of the invention. Herein, a light source is used as irradiating means 130, analogeously to the previous embodiment. In the present embodiment, a camera 150b is provided as capture means. Preferably, a camera of the type used in endoscopes is provided. Again, irradiating means and capture means are provided on the outside on opposite sides of wall 101a. At least the portions of wall 101a, on which the irradiating means and the capture means are provided, are made of a transparent material.

With this set-up, it is possible to directly monitor the pointer 116 or the stem 112 of needle 110. For example, it is possible to capture the visible length of the pointer (as viewed from the position of camera 150b), and/or the width or length of the stem 112 (again as viewed from the position of camera 150b), which, as outlined above, are functions of cylinder pressure.

An associated computing unit 170 (hardware) is provided for processing the information captured by the capture unit 150, which can, for example, be provided with image processing algorithms, which can be used to translate the captured information into pressure values.

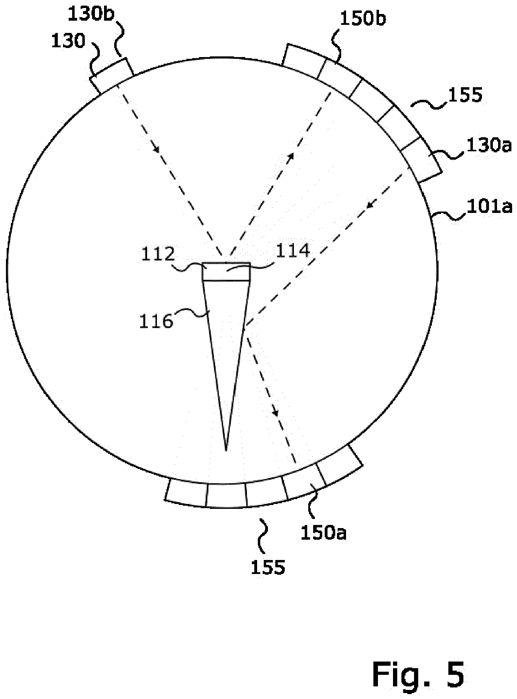

A further embodiment of the invention is shown in Figure 5. Here, light emitted by a first light source 130a (dashed line) is reflected off pointer 116 and captured by a first photodetector 150a of a photodetector array 155 provided around the circumference of cylindrical wall 101a. Advantageously, a laser diode is used as first light source 130a. As pointer 116 changes its rotational position in dependence on the pressure in gas cylinder 80, the angle of the reflected beam will also change.

In addition or alternatively hereto, light emitted by a second light source 130b (dashed line) is reflected off stem 112 and captured by a second photodetector 150b of photodetector array 155. Advantageously, a laser diode is also used as second light source 130b. As stem 112 also changes its rotational position analogously to pointer 116 in dependence on gas pressure, the angle of the beam reflected off stem 112 will also change. In order to achieve reliable and redundant results, the pressure values corresponding to both reflected beams can be compared to one another. A comuting unit is not explicitly shown in this embodiment.

As an advantageous embodiment of light sources 130,130a, infrared LEDs can be used. In this case, photodetector array 155 comprises a plurality of IR reflectance sensors.

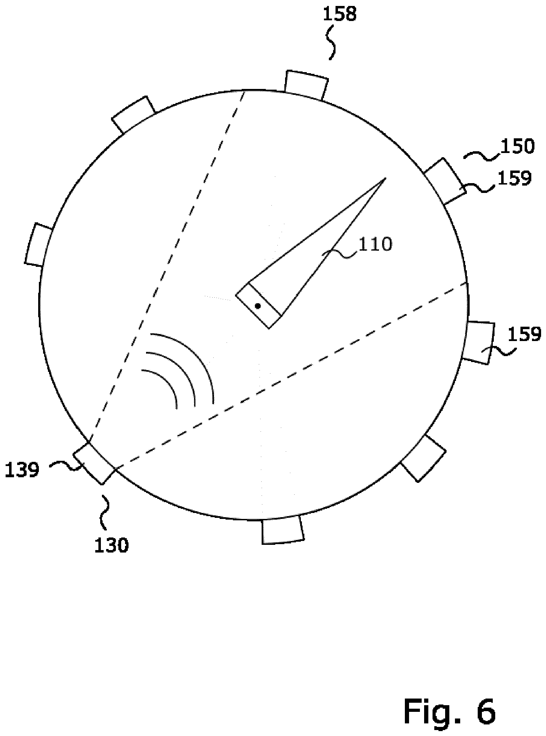

In a further embodiment of the invention, as shown in Figure 6, the irradiation unit 130 is provided as an ultrasound transmitter 139. Ultrasound generated by transmitter 139 is captured by an array 158 of capture units 150 provided as piezoelectric detectors 159. These detectors are adapted to measure the time of flight ToF it takes for the ultrasound to travel from the transmitter 139 to the various detectors 159. The ToF will vary as a function of the position of needle 110. The ToF can therefore be recorded as a function of position of needle 110 and thus cylinder pressure. For example if a single tranmitter 139 is used, the piezo electric detectors 159 will exhibit a typical reponse for the initial transmittion. The response could be ascertained or detected by initally using a gauge without a needle (so called calibration gauge), or a standard gauge, in which the needle is at a known position (e.g. indicating an empty gas cylinder). If a needle is then fitted or its position changes, this places a barrier between the source and the detector. The barrier can reflect the signal back towards one or more of the detectors and by analysing the detector response for a range of needle positions, the needle position can be determined.

In all embodiments described above, the cylinder pressure is obtained by inputting the information captured by the capture units 150 to a computing unit 170, e.g. a microcontroller. The computing unit can use this information to calculate specific pressure values and thus the current content of the gas cylinder. It can generate alerts for a user relating to low gas content either locally, or by using a wireless transmission to a remote display. Multiple wireless transmissions from such digitally enhanced cylinders could be used for an inventory management system at a customer site, for example a hospital.

The values of cylinder pressure thus obtained can also be used as cross reference checks ("dead reckoning") or for other methods useful in measuring remaining contents of gas cylinders by measuring the flow of gas leaving the cylinders.

The wavelength of light chosen for the various light sources acting as irradiation units and/or the sensitivity of the detectors used as capture units can be specifically chosen to minimize signal to noise ration. Optical filters may be used over the detectors to filter out unwanted background lighting. Infrared illumination can for example be used so that the measurement is not visible to the naked eye.

The invention is advantageous in that non-digital valves or gauges can be easily upgraded to have a digital functionality. All components added on to a prior art gauge, especially illuminating units, capture units and computing units, can be provided at low cost. These components can especially be provided as an add-on kit to enhance existing analogue valves or gauges. Long battery lifetimes can be provided by only monitoring needle position when necessary, a specific measurement being achievable in a short space of time, e.g. a few milliseconds. The invention provides a non invasive method that requires no interference with high pressure components of a gas cylinder. Also, no parts of existing gauges must be dismantled, i.e. the invention provides a plug and play solution.

The invention is not only applicable to gauges, especially pressure gauges, it can also be used for example in applications where a gauge position needs to be monitored without obscuring the front face of the gauge, and/or where replacement of an existing analogue gauge with a digital gauge is cost prohibitive, such as any needle measuring a flow, a speedometer in a car etc.

## Claims

1. Gauge (100) comprising a gauge needle (110), a rotational position of which in a rotational plane (115) indicating a measurement value, the gauge needle comprising a stem (112) rotatable about a rotational axis (114) and an pointer (116) extending perpendicularly to the stem (112), a rotation of the stem (112) about the rotational axis (114) effecting a movement of the pointer (116) within the rotational plane, further comprising an irradiation unit (130) for irradiating the gauge needle (110) with irradiation including a radiation component propagating in a direction parallel to the rotational plane of the pointer (116) and a capture unit (150) for capturing the irradiation subsequently to the irradiation impinging or otherwise interacting with the gauge needle (110) in order to ascertain the rotational position of the gauge needle (110).

2. Gauge according to claim 1, wherein the irradiation unit (130) and the capture unit (150) are arranged on a gauge housing (120) circumferentially surrounding the rotational plane of the pointer.

3. Gauge according to any one of the preceding claims, wherein the irradiation unit (130) comprises a light source (132) and the capture unit (150) comprises a at least one light detector and/or at least camera.

4. Gauge according to any one of the preceding claims 1 to 2, wherein the irradiation unit (130) comprises a sound source (138), especially an ultrasound source, and the capture unit (150) comprises a sound detector (158), especially an ultrasound detector.

5. Gauge according to any one of the preceding claims, wherein the capture unit (150) captures irradiation passing by the gauge needle (110).

6. Gauge according to any one of the preceding claims, wherein the capture unit (150) captures irradiation reflected by the gauge needle (110).

7. Gauge according to any one of the preceding claims, wherein the stem (112) is provided with a non-circular cross-section.

8. Gauge according to any one of the preceding claims, comprising a computing unit (170) for calculating the rotational position of the gauge needle (110) on the basis of the irradiation captured by the capture unit (150) and a pressure value on the basis of the rotational position of the gauge needle (110).

9. Gauge according to any one of the preceding claims, which is provided as a pressure gauge, the measurement value being a pressure value.

10. Add-on kit for a gauge, especially a pressure gauge, comprising a gauge needle (110), a rotational position of which in a rotational plane (115) indicating a pressure value, the gauge needle comprising a stem (112) rotatable about a rotational axis (114) and a pointer (116) extending perpendicularly to the stem (112), a rotation of the stem (112) about the rotational axis (114) effecting a movement of the pointer (116) within the rotational plane, the add-on kit comprising an irradiation unit (130) adapted for irradiating the gauge needle (110) with irradiation including a radiation component propagating in a direction parallel to the rotational plane of the pointer (116) and a capture unit (150) adapted for capturing the irradiation subsequently to the irradiation impinging or otherwise interacting with the gauge needle (110) in order to ascertain the rotational position of the gauge needle (110).

11. Method for providing a digitized gauge reading for a gauge, especially a pressure gauge, comprising a gauge needle (110), a rotational position of which in a rotational plane (115) indicating a measurement value, the gauge needle comprising a stem (112) rotatable about a rotational axis (114) and an pointer (116) extending perpendicularly to the stem (112), a rotation of the stem (112) about the rotational axis (114) effecting a movement of the pointer (116) within the rotational plane (115), the method comprising irradiating the gauge needle (110) with irradiation including a radiation component propagating in a direction parallel to the rotational plane of the pointer (116) and capturing the irradiation subsequently to the irradiation impinging or otherwise interacting with the gauge needle (110) in order to ascertain the rotational position of the gauge needle (110).
